Europäisches Patentamt

European Patent Office

Office européen des brevets

(19)

(11) Publication number: **0 063 960**
**A2**

# (12) EUROPEAN PATENT APPLICATION

(21) Application number: **82302174.6**

(22) Date of filing: **28.04.82**

(51) Int. Cl.³: **B 65 G 53/40**

(30) Priority: **28.04.81 GB 8113066**

(43) Date of publication of application: **03.11.82**
Bulletin 82/44

(84) Designated Contracting States: **BE DE FR IT NL SE**

(71) Applicant: **JOSHUA BIGWOOD & SON LIMITED, P.O. Box 23 Wednesfield Road, Wolverhampton West Midlands, WV10 0DP (GB)**

(72) Inventor: **Hitchman, Alan Frank, 22 Glen Close, Walsall West Midlands (GB)**
Inventor: **Oliver, Ronald Walter, 52 Langley Road, Lower Penn Wolverhampton Staffs (GB)**
Inventor: **Ellis, Alan, 40 Timbertree Road, Cradley Heath Warley West Midlands (GB)**

(74) Representative: **Lewis, Samuel Hewitt et al, FORRESTER & BOEHMERT Widenmayerstrasse 4/I, D-8000 München 22 (DE)**

(54) Improvements relating to apparatus for the conveying of particulate material.

(57) Apparatus for conveying particulate material, particularly coal, which comprises a conduit through which a first air stream flows and which includes a chamber (6) having a side inlet through which material is fed continuously into the chamber at right angles thereto by a screw conveyor (34) so that the particles become entrained in the air stream. The conduit further comprises a cylindrical outlet member (16) through which the particles are conveyed by the first air stream, and a second air stream flows around the first air stream from an annular gap between the outlet member and a nozzle member (18) surrounding the latter. The conduit is disposed at an inclination to the horizontal so that the material introduced by the screw conveyor falls into the first air stream.

Title: " Improvements relating to apparatus for the
       conveying  particulate material"

Description of the Invention

This invention relates to apparatus for conveying
particulate material.

The apparatus of the invention has been devised
primarily for the conveying of coal and the following
description of the invention will therefore be confined
to this application.  However, it is to be understood
that there is no limitation in this regard as the
invention may be used to advantage in the conveying of
other particulate materials.

A conventional method of conveying coal particles is
to entrain the particles in a stream of air.
Conventionally the coal particles are delivered into a
conduit through which air is pumped, allowing the air
stream to carry the particles entrained therein through
the conduit to their intended destination, at which the
particles are allowed, or caused to flow from the air
stream.

A typical grade of coal which is used in, for
example, solid fuel burners which are incorporated in
boilers for heating water for water supply and central
heating installations, for example in schools, offices
and factories, is known as "one inch singles", this range
comprising particles from one eighth of an
inch(approximately 3mm) up to one inch (approximately
25mm)with the proportion of particles smaller than one
eighth of an inch being  no more than 3%.  This grade
provides few problems in being conveyed by conventional pneumatic systems.

However, increasingly frequently the proportion of small particles in the grade arises to considerably in excess of 3% and where such particles are of the very small kind, known as "fines", problems are encountered in conventional pneumatic systems.

In particular, the fines tend to conglomerate around the point of entry of the particulate material into the air stream, increasing resistance to air flow (which exacerbates the problem), and may eventually block the system. This can cause serious problems, including the need to empty the delivery conduit of coal particles preparatory to starting the system up again.

Theoretically it would be possible to reduce this tendency by increasing the air flow speed, but this results in the following disadvantages:

(a) the higher power requirements to produce the increased air flow speed;

(b) the tendency for the coal particles to abrade, creating dust, and the increased wear produced on the interior of the delivery conduit;

(c) an increase in the likelihood of violent turbulence being created.

(d) back pressures in the delivery conduit.

Further, most pneumatic systems deliver coal particles to a hopper, from which coal is fed to the boiler by conventional means, for example a screw conveyor. It would be advantageous to be able to deliver coal to such a burner directly by a pneumatic delivery system, but the high flow rate of air currently required is too high to permit direct entry, since the ratio of the quantity of air to the quantity of coal is higher than is necessary to produce optimum burning characteristics and the excess air needed in conventional pneumatic delivery would produce too great a rate of burning.

It is one of the various objects of this invention to overcome or reduce some of the difficulties set out above.

According to this invention there is provided apparatus for the conveying of particulate material, comprising a conduit, means for producing a first air stream through the conduit, feed means for introducing particulate material into the conduit through a side inlet so that the particles become entrained in said air stream, and means for producing a second air stream around, and flowing in the same direction as, said first air stream at a location adjacent to and downstream of the feed means.

Preferably the conduit is arranged to conduct the first air stream along an axis and the feed means are arranged to feed particulate material into the conduit at right angles to said axis. This axis may be inclined so that the particulate material is dropped into the first air stream, assisting the entrainment of the particulate material in the air stream. It may be possible for the axis to be vertical so that the material is blown upwardly.

The conduit preferably has a portion of enlarged cross sectional area into which the particulate material is fed.

The first and second air streams may be delivered from a single air impeller, for example a fan, by splitting the air flow delivered by the impeller. Alternatively separate impellers may be used for the two air streams.

The invention has particular advantages in the conveying of coal in particulate form, particularly in a form the particules of which are less than one inch in size.

The invention will now be described in detail, by way of example, with reference to the accompanying drawings, in which:-

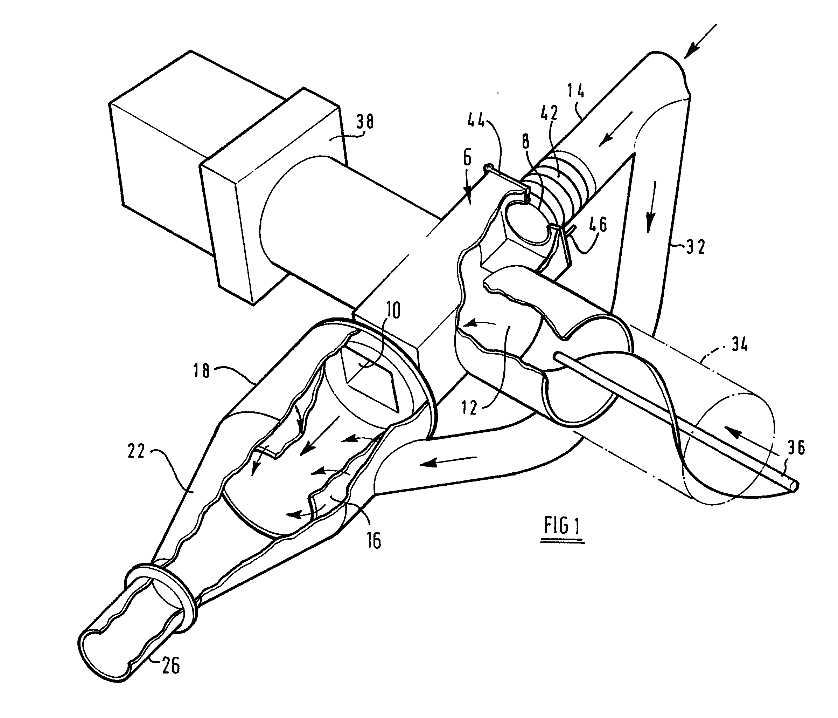

FIGURE 1 is a perspective view of one form of apparatus embodying the invention; and

FIGURE 2 is a side view of the outlet nozzle assembly of the apparatus.

The apparatus illustrated in the drawings has been designed particularly for conveying particulate coal from a coal bunker to a hopper, and includes a conduit through which air under pressure is pumped from an air delivery device such as a fan (not shown)and into which coal particles are fed from the bunker so that they are entrained in the air stream and conveyed by the stream to the hopper.

The conduit comprises a coal inlet or injection chamber 6 of rectangular cross-section having a circular air inlet port 8 at one end thereof, a rectangular outlet port 10 at the other end and a circular coal inlet port 12 in the side wall thereof intermediate its ends, an air inlet duct 14 connected to the air inlet port 8, a cylindrical outlet member 16, in communication with the outlet port 10, and a nozzle member 18 extending around the outlet member 16. The outlet member 16 is connected by a flanged connection to a short duct 28 which in turn is connected by a flanged connection to the chamber 6.

The nozzle member 18 comprises a cylindrical portion 20 and a frusto-conical portion 22 which terminates in a short, flanged outlet portion 24, to which a flexible delivery conduit 26 is secured.

The annular space between the outlet member 16 and the cylindrical portion of the nozzle member 18 is closed at its inner end by the flanged connection joining the outlet member to the duct 28. The duct 14, the chamber 6, the outlet member 16 and the nozzle member 18 are all disposed on a common axis which is inclined downwardly at about 45° to the horizontal in the direction of flow of air through the conduit formed thereby.

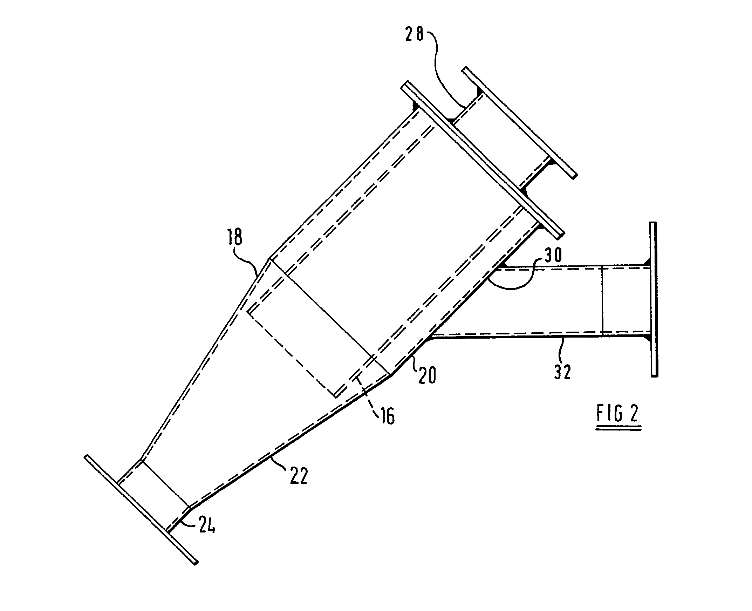

Extending from the inlet duct 14 is a by-pass duct 32, which is connected to a port 30 in the cylindrical portion 20 of the nozzle member. The direction of entry of the by-pass duct 32 into the annular space between the outlet member 16 and the cylindrical portion 20 is inclined at an angle of about 45° to the longitudinal axis of the assembly (see Figure 2).

Connected to the coal inlet port 12 is a screw conveyor 34, having a drive shaft 36 which extends across the chamber 6 and is driven by a drive motor 38 on the side of the chamber opposite to the screw conveyor. By operation of the drive motor, the screw conveyor is rotated, causing particulate coal to be fed from the coal bunker into the chamber at a generally constant rate. The screw conveyor is at right angles to the axis of the chamber.

In operation, air under pressure is delivered by the fan into the inlet duct 14, such air affording a first air stream which flows through the inlet port 8, the chamber 6, the outlet port 10 and the outlet member 16, and into the nozzle member 18, and a second air stream which flows along the by-pass duct 32, into the annular space between the outlet member 16 and nozzle member 18. On operation of the drive motor 38, the screw conveyor is rotated, feeding particles of coal towards and into the chamber 6, wherein such particles become entrained in the first air stream, to be conveyed from the chamber and through the outlet member 16 by said air stream. Such entrainment is aided by the inclination of the longitudinal axis of the chamber and outlet nozzle.

As the second air stream is delivered to the annular space between the outlet member 16 and the cylindrical portion 20 of the nozzle member 18, immediately prior to flow of said second air stream across the end of the outlet member 16, the air stream is compressed by the frusto-conical portion 22.

As the second air stream passes over the end of the outlet member 16, a pressure differential is set up, assisting in drawing the first air stream and the coal particles entrained therein, through the chamber 6.

If there is a temporary blockage of material in the conduit, more air is diverted through the by-pass duct and this relieves the pressure of air on the blockage which would otherwise compact the material, thereby making it more difficult for the air flow to free the blockage.

The screw conveyor feeds material into the chamber continuously, and the pressure differential set up where the first and second air streams meet, acts to prevent pressurisation of the material in the screw and hence jamming of the conveyor. Thus an increase in pressure of the second air stream reduces the pressure of the first air stream which would otherwise pressurise the material in the screw.

The chamber 6 is of a larger cross-sectional area than the inlet duct 12 to provide the particles entering the chamber at a relatively high velocity with sufficient space for them to be collected and picked up by the first air stream.

The combined air stream, including the first air stream with the coal particles entrained therein, and the second air stream flowing predominently around the first air stream, is compressed further as it flows through the frusto-conical portion 22, and the combined air stream flows into the outlet portion 24 and the flexible delivery conduit 26, with substantially all the particles of coal entrained therein.

As will be appreciated, the present invention may be utilised to feed coal at a greater rate and/or with a greater reliability, without increasing the power of the air delivery means, or can be used to feed coal at a similar rate, utilising lower air delivery power, and hence lower air flow rates. In this manner, the invention may be applied to the direct feeding of coal to a solid fuel boiler.

However, in general terms, it is to be appreciated that the invention is not limited to use in the delivery of coal, and may be utilised in the feeding of other particulate materials.

The inlet duct 12 has a flexible portion 42 connected to a hinged end wall 44 of the chamber 6, the end wall being held in its closed position by a pin 46. If a blockage of material occurs in the chamber which is not freed by the air flow, the pressure of material against the end wall causes the pin to shear so that the end wall opens and releases the material. The pin can also be released and the end wall opened for cleaning of the chamber.

- 8 -                          0063960

CLAIMS

1. Apparatus for conveying particulate material, comprising a conduit, means for producing a first air stream through the conduit, feed means for introducing particulate material into the conduit through a side inlet so that the particles become entrained in said air stream and means for providing a second air stream around, and flowing in the same direction as, said first air stream at a location adjacent to and downstream of the feed means.

2. Apparatus according to Claim 1 wherein the conduit is arranged to conduct the first air stream along an axis.

3. Apparatus according to Claim 1 or Claim 2 wherein the feed means are arranged to feed material into the conduit at right angles to the conduit.

4. Apparatus according to Claims 1, 2 or 3 wherein the conduit is inclined to the horizontal.

5. Apparatus according to any one of Claims 1, 2, 3 and 4 wherein the conduit has a portion of enlarged cross sectional area into which the material is fed.

6. Apparatus according to Claim 5 wherein said portion of the conduit comprises a chamber which is provided with the side inlet of the feed means and has an inlet port for the first air stream and an outlet port for particles entrained in said stream.

7. Apparatus according to Claim 6 wherein the conduit further comprises a cylindrical outlet member connected to the outlet port of the chamber.

0063960

8. Apparatus according to Claim 8 wherein said second air stream is fed through an annular gap between the outlet member and a nozzle member of circular cross-section which extends around the outlet member.

9. Apparatus according to Claim 8 wherein said second air stream is constricted as it passes over the end of the outlet member.

10. Apparatus for conveying particulate material substantially as hereinbefore described with reference to and as illustrated in the accompanying drawings.

11. Any novel feature or novel combination of features disclosed herein and/or illustrated in the accompanying drawings.

FIG 1

38

44

6

42

14

8

46

32

10

18

34

12

22

36

16

26

½

0063960

FIG 2